# EUROPÄISCHE PATENTSCHRIFT

(11) **EP 2 055 636 B1**
(45) Veröffentlichungstag und Bekanntmachung des Hinweises auf die Patenterteilung: **22.06.2011**
(21) Anmeldenummer: 09002463.9
(22) Anmeldetag: 04.03.2005
(51) Int. Cl.: B65B 1/36

(54) **Vorrichtung und Verfahren zum Befüllen von Folienbeuteln mit Nahrungsmitteln**
Device and procedure for filling bags with food
Dispositif et procédure de remplir des sacs avec des produits alimentaires

(43) Veröffentlichungstag der Anmeldung: 06.05.2009
(62) Teilanmeldung aus: 05004822.2
(73) Patentinhaber: INDAG Gesellschaft für Industriebedarf mbH & Co. Betriebs KG, 69214 Eppelheim (DE)
(72) Erfinder: Wild, Hans-Peter, Dr., 69214 Eppelheim (DE); Kraft, Eberhard, 74924 Neckarbischofsheim (DE)
(74) Vertreter: Grünecker, Kinkeldey, Stockmair & Schwanhäusser Anwaltssozietät

(56) Entgegenhaltungen:
- EP-A- 0 043 875
- US-A- 4 074 507

## Beschreibung

Die Erfindung betrifft eine Vorrichtung und ein Verfahren zum Befüllen von Folienbeuteln mit Nahrungsmitteln. Nahrungsmittel können hier sowohl Nahrungsmittel für den menschlichen Genuss als auch für Tiere, wie Haustiere oder Ähnliches, sein.

Bekannt sind Vorrichtungen zum Befüllen von Folienbeuteln mit Getränken, d. h. mit flüssigen Nahrungsmitteln. Um eine gewünschte Menge abzufüllen, wird während des Befüllens die Durchflussmenge erfasst, und bei Erreichen der vorgegebenen Menge die Befüllung gestoppt.

Die Druckschrift US 4074507 offenbart eine Maschine zum Befüllen von Beuteln mit pulverigem Material, die eine Transporteinrichtung, einen Vorratstrichter mit Rührer sowie eine Befüll- und Verschließeinrichtung für die Beutel umfasst.

Der vorliegenden Erfindung liegt die Aufgabe zu Grunde, auch andere Nahrungsmittel als Getränke in Folienbeutel abfüllen zu können.

Diese Aufgabe wird gelöst durch eine Vorrichtung nach Anspruch 1 und ein Verfahren nach Anspruch 8. Bevorzugte Ausführungsformen sind in den Unteransprüchen offenbart.

Bei der Abfüllung von festen Nahrungsmitteln ist das Prinzip der Abfüllung der flüssigen Nahrungsmittel nur schwer einsetzbar, da ein kontinuierlicher Transport der festen Nahrungsmittel bis zu einer gewünschten Menge schwierig ist oder sehr zeitaufwendig ist.

Der Begriff Nahrungsmittel soll alle genießbaren Stoffe umfassen, also auch solche die nicht nahrhaft sind, aber dennoch in Lebensmitteln vorkommen können.

Die festen Nahrungsmittel liegen vorzugsweise als Granulat, Körnchen, Kügelchen, Plätzchen, Stäbchen oder ähnliches vor.

Erfindungsgemäß weist die Vorrichtung eine Dosiereinrichtung auf, mit der eine vorbestimmte Menge an festen Nahrungsmitteln abgemessen werden kann. Die so abgemessene Menge kann dann mit einer Befülleinrichtung zum Befüllen der Folienbeutel mit festen Nahrungsmitteln zügig in den Beutel gegeben werden. Bei dem Verfahren werden die festen Nahrungsmitteln erst abgemessen und anschließend in die Folienbeutel gefüllt. Dadurch, dass erst eine Menge abgemessen wird, die dann abgefüllt wird, ist es möglich feste Nahrungsmittel dosiert abzufüllen und dies sehr zügig.

Neben der Befüllung mit festen Nahrungsmitteln kann auch die Befüllung mit flüssigen Nahrungsmitteln vorgesehen sein. In dem Beutel kann sich dann eine Mischung ausbilden.

Vorteilhaft ist eine Dosiereinrichtung, mit der verschiedene Mengen dosiert werden können, d. h., dass verschiedene Mengen abgefüllt werden können. Dadurch kann je nach gewünschter Komposition des Beutelinhalts, der sich aus verschiedenen Komponenten zusammensetzen kann, eine unterschiedliche Menge von festen Nahrungsmitteln abgefüllt werden.

Vorteilhafterweise weist die Vorrichtung eine Dosierkammer auf, die in ihrer Größe verstellbar ist. Dadurch können unterschiedliche Mengen eingestellt werden. Die Dosierkammer ist hierbei vorteilhafterweise teleskopartig verstellbar. Dies ermöglicht einen möglichst einfachen Aufbau einer größenverstellbaren Dosierkammer.

Die Dosierkammer ist vorteilhafterweise in, an, auf, unter oder bei einem Schieber ausgebildet, sodass die Dosierkammer mit dem Schieber bewegt werden kann, wobei der Schieber von einem Antrieb bewegbar ist. Der Schieber ist auf einen Steuerbefehl hin von dem Antrieb lösbar, sodass bei fehlendem Folienbeutel der Schieber und damit die Dosierkammer nicht bewegt werden, um so einen Ausstoß von festen Nahrungsmitteln zu verhindern, da dieser nicht von einem Folienbeutel aufgenommen werden kann.

Die erfindungsgemäße Vorrichtung umfasst einen Vorratstrichter für die festen Nahrungsmittel. Dieser weist ein Linearrührwerk als ein Verteilorgan auf, das das feste Nahrungsmittel gleichmäßig in dem Vorratstrichter verteilt. Dies stellt eine gleichmäßige Befüllung von mehreren Folienbeuteln sicher, die gleichzeitig abgefüllt werden.

Vorteilhaft ist es, eine Produktleitung vorzusehen, die an der Befüllposition der Folienbeutel endet. Dadurch kann eine sichere Zuführung der festen Nahrungsmittel in den Folienbeutel sichergestellt werden. Vorteilhafterweise ist diese Produktleitung trichterförmig, sodass eine Eingabe von Nahrungsmitteln in die Produktleitung möglichst einfach ist.

Die Produktleitung ist vorzugsweise bewegbar, sodass das Ende der Produktleitung in den Folienbeutel rein und raus bewegt werden kann. Zum Befüllen der Folienbeutel ist es vorteilhaft, wenn die Produktleitung in dem Folienbeutel endet, wohingegen es zum Transport der Folienbeutel nach oder vor der Befüllung vorteilhaft ist, wenn die Produktleitung außerhalb des Folienbeutels endet.

Vorteilhaft ist es weiterhin, wenn am oberen Ende oder oberhalb der Produktleitung ein Fluidauslass vorgesehen ist, mit dem ein Fluid in die Produktleitung gegeben werden kann. Dadurch ist es möglich, ein Gas- oder Flüssigkeitspolster zu schaffen, das verhindert, dass die festen Nahrungsmittel an der Produktleitung kleben bleiben. Auch kann der selbe Fluidauslass oder ein anderer Fluidauslass vorgesehen sein, mit dem beispielsweise Dampf in die Produktleitung gegeben wird, um diese zu befeuchten. Auch dies verhindert ein Verkleben der festen Nahrungsmittel.

Für den Transport der Folienbeutel sind vorteilhafterweise einfache Aufnahmen vorgesehen, in die die Folienbeutel gesteckt werden können. Dadurch ist eine möglichst kostengünstige und mechanisch einfache Aufnahme der Folienbeutel für den Transport gewährleistet. Die Aufnahmen sind dabei so konstruiert, dass geeignete Folienbeutel in der Aufnahme leicht geöffnet sind.

Zum weiteren Öffnen zum Befüllen können Drückhebel vorgesehen sein, die seitlich auf die Folienbeutel drücken, wobei diese vorzugsweise noch eine Kontur haben, die einem geöffneten Folienbeutel angepasst ist, um den Folienbeutel so beim Füllen stützen zu können. Auch können Zughebel vorgesehen sein, die den Folienbeutel für den Befüllvorgang an seiner Befüllöffnung aufziehen.

Bei dem erfindungsgemäßen Verfahren wird vorteilhafterweise eine Dosierkammer zwischen einer Be- und einer Entladeposition hin und her bewegt, wodurch das Dosieren erreicht wird.

Weiter wird bei dem Verfahren vorteilhafterweise die Dosierkammer in ihrer Größe verändert, sodass verschiedene Mengen abgefüllt werden können.

Vorteilhaft ist ein Verfahren, bei dem geprüft wird, ob an der Befüllposition ein Folienbeutel zur Aufnahme der festen Nahrungsmittel vorhanden ist oder nicht. Falls festgestellt, wird, dass kein Folienbeutel vorhanden ist, wird die Dosierkammer nicht in die Entladeposition gebracht, sodass kein Nahrungsmittel vergeudet wird und die Maschine nicht verschmutzt wird.

Die Produktleitung, mit der die Nahrungsmittel in den Folienbeutel eingebracht werden können, ist vorzugsweise bewegbar. Dabei kann die Produktleitung mehrmals ruckartig auf den Folienbeutel zu und weg bewegt werden, um sicherzustellen, dass die festen Nahrungsmittel die Produktleitung passieren.

Vorteilhafte Ausführungsformen der Erfindung sind in den beiliegenden Figuren erläutert. Dabei zeigt:
- Figur 1: eine schematische Schnittzeichnung einer Vorrichtung;
- Figur 2: eine schematische Schnittzeichnung von einer Vorrichtung zum Befüllen;
- Figur 3: eine schematische Schnittzeichnung einer Dosiereinrichtung;
- Figur 4: eine schematische Darstellung einer Dosierkammer in verschiedenen Größen;
- Figur 5: einen Folienbeutel in verschiedenen Öffnungsstellungen;
- Figur 6: eine Produktleitung und einen Folienbeutel;
- Figur 7: eine Vorrichtung zum Befüllen von Folienbeuteln.

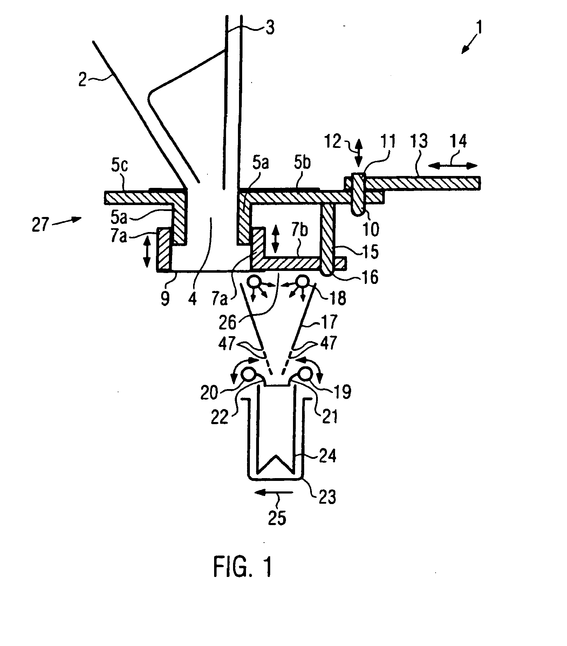

In Figur 1 ist eine Vorrichtung 1 zum Befüllen von Folienbeuteln 24 gezeigt. In einem Vorratstrichter 2 kann festes Nahrungsmittel bevorratet werden, um einen Befüllvorgang längere Zeit ohne Nachschub durchführen zu können. Das Nahrungsmittel kann mit einem Linearrührwerk 3 in dem Vorratstrichter 2 gleichmäßig verteilt werden. Das Linearrührwerk verschiebt dabei Rührstäbe oder Rührbügel in dem festen Nahrungsmittel hin und her. Dies erlaubt eine schonende Behandlung bei guter Gleichverteilung in dem Vorratstrichter 2.

Unterhalb von dem Vorratstrichter 2 ist eine Dosierkammer 4 dargestellt. Diese wird seitlich durch zwei zylinderförmige Elemente 5 a und 7 a begrenzt. Nach unten hin ist die Dosierkammer 4 durch eine Platte 9 abgeschlossen. Die Dosierkammer 4 befindet sich hier in der Beladeposition, da sie unterhalb des Vorratstrichters 2 ist. Die Zylinderelemente 5 a und 7 a sind jeweils mit Schieberteilen 5 b und 7 b verbunden. Diese beiden Schieberteile 5 b und 7 b sind durch einen Zapfen 15 miteinander verbunden, wobei sie sich in Figur 1 in der Senkrechten gegeneinander bewegen können. Dazu greift der Zapfen 15 in eine Öffnung 16 des Schieberteils 7 b ein. Durch den Zapfen 15 ist eine gute Kopplung der Schieberteile 5 b und 7 b gegeben, wobei jedoch die Beweglichkeit in der Vertikalen erhalten bleibt, die für die Verstellung der Dosierkammergröße wichtig ist (s.u.).

Eines der beiden Schieberteile 5 b, 7 b (hier 5 b) weist eine Öffnung 10 auf, in die ein verschiebbarer Klinker 11 eingreifen kann. Der Klinker 11 ist entlang der Richtung 12 auf und ab bewegbar. Das Element 13 stellt einen Antrieb dar, der in Richtung 14 vor und zurück bewegbar ist. Falls der Klinker 11, wie in Figur 1 gezeigt, in die Öffnung 10 hineinragt, wird bei Bewegen des Antriebs 13 auch das Schieberteil 5 b zusammen mit den Schieberteilen 5 a und 5 c bewegt. Weiter wird durch den Zapfen 15 auch das Schieberteil 7 b und somit auch das Schieberteil 7 a bewegt. Durch den Antrieb 13 kann somit die gesamte Dosierkammer 4 bewegt werden, falls der Klinker 11 in die Öffnung 10 ragt. Ist der Klinker 11 aus der Öffnung 10 herausgezogen, so verbleibt die gesamte Dosierkammer in ihrer Position. Dies ist insbesondere für eine Maschine vorteilhaft, bei der mehrere Dosierkammern 4 nebeneinander angeordnet sind, die jedoch alle mit ein und demselben Antrieb 13 bewegbar sind. Falls eine Dosierkammer 4 nicht bewegt werden soll, weil beispielsweise kein Folienbeutel zum Befüllen vorhanden ist, dann kann für diese Dosierkammer 4 der Klinker 11 aus der Öffnung 10 herausgezogen werden, so dass bei Bewegung des Antriebs 13 für die anderen Dosierkammern 4, die bewegt werden sollen, die eine Dosierkammer in ihrer Position verbleibt. Die Bewegung des Klinkers 11 in Richtung 12 erfolgt vorzugsweise automatisch durch beispielsweise eine Pneumatik, Mechanik, Hydraulik oder einen elektrischen Motor. Die Automatische Betätigung ist vorzugsweise mit einem Sensor gekoppelt, der ermittelt, ob ein Folienbeutel in der Befüllposition ist oder nicht.

Die Platte 9 weist oberhalb von dem Trichter 17 eine Öffnung 26 auf. Wird die Dosierkammer 4 nach rechts über diese Öffnung 26 verschoben, kann der Inhalt der Dosierkammer 4 nach unten in den Trichter 17 fallen. Oberhalb von der Öffnung 26 in der Platte 9 ist die Entladeposition der Dosierkammer 4.

Die untere Öffnung des Vorratstrichters 2 und die Öffnung 26 können auch in der horizontalen Richtung in Fig. 1 weiter voneinander weg angeordnet sein. Dadurch kann verhindert werden, dass während sich die Dosierkammer 4 in einer mittleren Position zwischen Be- und Entladeposition befindet, festes Nahrungsmittel bereits durch die Öffnung 26 abgegeben wird und so gleich neues festes Nahrungsmittel aus dem Vorratstrichter 2 in die sich entleerende Dosierkammer 4 nach rutscht.

Zwischen der Entladeposition der Dosierkammer 4 und dem Fülltrichter 17 ist eine ringförmige Leitung 18 angeordnet, die Öffnungen aufweist. Diese Öffnungen können beispielsweise Luft in den Fülltrichter 17 einblasen, um zu verhindern, dass der Inhalt der Dosierkammer 4, der in den Fülltrichter 17 herabfällt, mit dem Fülltrichter 17 verklebt oder diesen blockiert. Das aus der Ringleitung 18 ausströmende Gas bildet hier ein Druckluftpolster.

Am unteren Ende des Fülltrichters 17 kann ein Folienbeutel 24 in einer Aufnahme 23 angeordnet werden. Oberhalb des Folienbeutels 24 befinden sich zwei Stangen 19, 20, die drehbar gelagert sind. An den Stangen 19, 20 sind Hebel 21, 22 angeordnet, die von oben in den Folienbeutel 24 eingreifen können und diesen durch eine Auseinanderbewegung der Hebel 21, 22 an seiner Oberseite weit öffnen können.

Ein Transport der Folienbeutel 24 durch die Aufnahmen 23 ist in Richtung 25 vorgesehen.

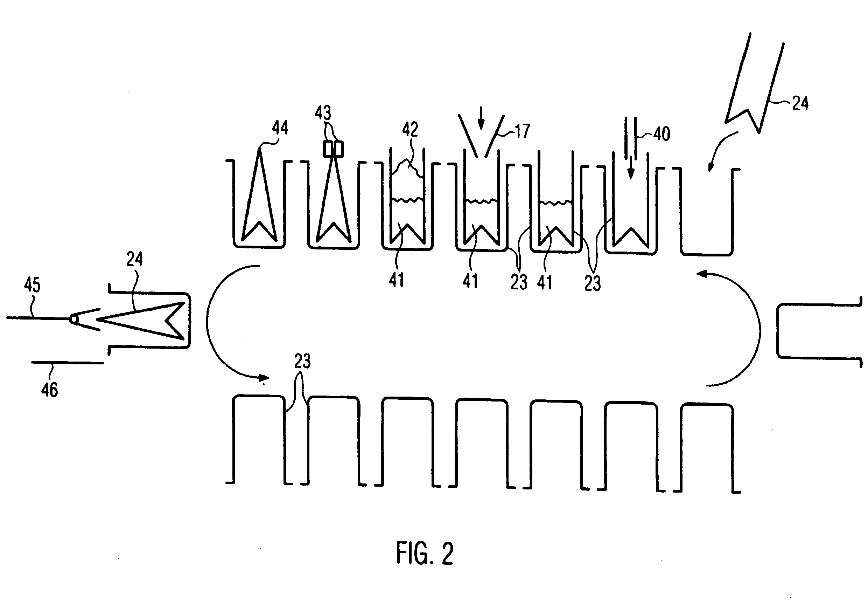

In Figur 2 ist eine komplette Vorrichtung zum Befüllen von Folienbeuteln schematisch gezeigt. Verschiedene Aufnahmen 23 sind mit Folienbeuteln 24 versehen. Weiter ist ein

Füllrohr 40 für das Zuführen von Flüssigkeiten 41 in die Folienbeutel 24 vorgesehen. Schematisch ist weiterhin ein Fülltrichter 17 zum Befüllen der Folienbeutel 24 mit festen Nahrungsmitteln 42 dargestellt. Die Position des Füllrohrs 40 und des Fülltrichters 17 können auch ausgetauscht sein, d. h. dass erst festes und dann flüssiges Nahrungsmittel abgefüllt werden kann. Weiter sind Schweißbacken 43 dargestellt, mit denen die oberen Enden eines offenen Folienbeutels miteinander verschweißt werden können, sodass diese dicht sind. Hierbei wird eine Schweißnaht 44 ausgebildet. Die beiden Schweißbacken 43, können jeweils nach oben hin weggeschwenkt werden, um den nächsten Beutel 24 in die Position zu bringen, bei der die dann herabbeschwenkten Schweißbacken 43 einen Beutel 24 verschweißen können.

Die Aufnahmen 23 werden anschließend am Ende eines Förderers um 90° gedreht, sodass die Folienbeutel 24 mit einem Greifer 45 entnommen werden können. Die entnommenen Folienbeutel 24 können beispielsweise auf einem Fließband 46 abgelegt werden und so wegtransportiert werden. Die leeren Aufnahmen 23 können durch den Förderer zurücktransportiert werden, um wieder mit einem Folienbeutel 24 versehen zu werden.

Das erfindungsgemäße Verfahren soll anhand von den Figuren 1 und 2 erläutert werden. In Figur 2 ist gezeigt, wie ganz rechts in Aufnahmen 23, ein Folienbeutel 24 eingesetzt wird. Der Folienbeutel 24 wird von der Aufnahme 23 so gehalten, dass er leicht geöffnet ist. Öffnungsmittel, die im Folgenden noch besprochen werden, öffnen den Beutel 24 so, dass ein Füllrohr 40 Flüssigkeit in den Folienbeutel 24 geben kann. Der so mit Flüssigkeit 41 befüllte Folienbeutel 24 wird in Figur 2 weiter nach links transportiert. Sobald der Folienbeutel 24 unter einem Fülltrichter 17 angekommen ist, wird dieser erneut mit entsprechenden Einrichtungen geöffnet, anschließend wird der Fülltrichter 17 in den Folienbeutel 24 abgesenkt und festes Nahrungsmittel 42 in den Folienbeutel 24 eingefüllt. Dazu wird die Dosierkammer 4 in der Beladeposition beladen, so dass durch das Volumen der Dosierkammer 4 eine bestimmte Menge abgemessen ist und anschließend in die Entladeposition oberhalb von dem Fülltrichtergebracht. Von dort gelangt das feste Nahrungsmittel durch den Fülltrichter 17 in den Beutel 24. Danach wird der Folienbeutel 24 mit Schweißbacken 43 an seinem oberen Ende verschweißt, sodass dieser mit einer Schweißnaht 44 verschlossen ist. Anschließend werden die Aufnahmen 23 um 90° gedreht, sodass die Folienbeutel 24 horizontal liegen und mit einem Greifer 45 entnommen werden können. Der Greifer 45 legt die gefüllten und verschlossenen Folienbeutel 24 auf einem Fließband 46 ab, das diese wegtransportiert.

Die Vorrichtung in Fig. 2 arbeitet taktweise. Innerhalb von einem Takt werden die Beutel jeweils um eine Behandlungsposition weiterbewegt. Sie weist weiterhin eine Vielzahl von parallelen Fülllinien auf, die jeweils mit einem Fülltrichter 17 und mit einem Füllrohr 41 ausgestattet sind.

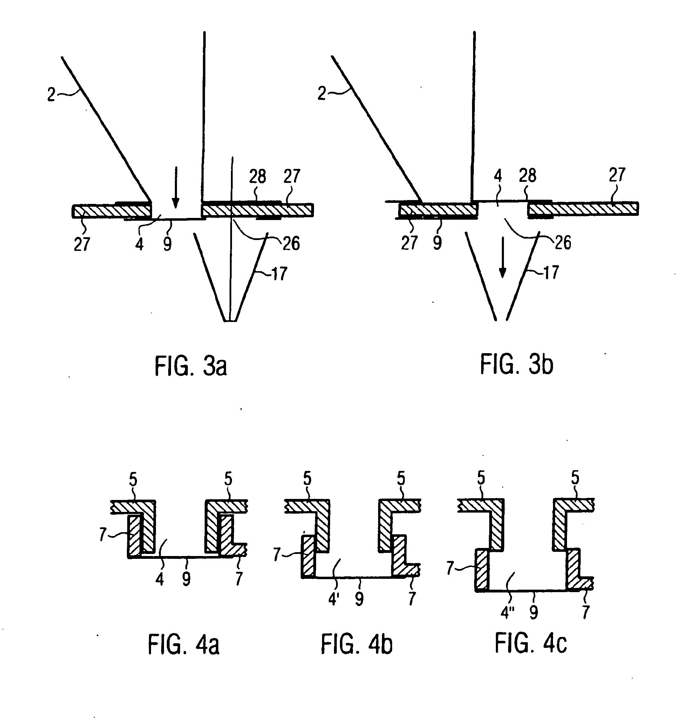

Zur Erläuterung des Befüllens der Folienbeutel 24 mit festen Nahrungsmitteln 42 ist in Figur 3 eine vereinfachte Version der Befülleinrichtung dargestellt. Statt einer Dosierkammer 4, die in ihrer Größe verstellbar ist, ist in Figur 3 eine Dosierkammer 4 gezeigt, die eine feste Größe hat. Die Ausführungen zu Figur 3 gelten jedoch auch entsprechend für eine Dosierkammer 4, wie sie in Figur 1 gezeigt ist.

In Figur 3 a befindet sich die Dosierkammer 4, die in einem einzelnen Schieber 27 ausgebildet ist, unterhalb eines Vorratstrichters 2. Das untere Ende der Dosierkammer 4 ist mit einer Platte 9 abgeschlossen. In der Position in Figur 3 a kann festes Nahrungsmittel aus dem Vorratstrichter 2 in die Dosierkammer 4 gelangen. Anschließend wird die Dosierkammer 4 durch Bewegung des Schiebers 27 nach rechts verschoben. Dabei verschließt ein Teil des Schiebers 27 das untere Ende des Vorratstrichters 2, damit nichts unkontrolliert aus dem Vorratstrichter 2 austritt. Weiterhin ist rechts von dem Vorratstrichter 2 eine Abdeckplatte 28 vorgesehen, die die Dosierkammer 4 nach oben hin begrenzt. Die untere Abdeckplatte 9 weist eine Öffnung 26 auf, die sich an der Entladeposition der Dosierkammer 4 befindet. Wird die Dosierkammer 4 über diese Öffnung 26 geschoben, kann das feste Nahrungsmittel aus der Dosierkammer 4 heraus in den Fülltrichter 17 fallen. Die leere Dosierkammer 4 kann mit dem Schieber 27 anschließend in die Position in Figur 3 a zurückbewegt werden, um so dort erneut beladen zu werden.

In Figur 4 ist schematisch dargestellt, wie die Dosierkammer 4 in ihrer Größe verstellt werden kann. Die Zylinderwand 7 und die untere Platte 9 können zusammen höhenverstellt werden.

In Figur 4 a ist eine Konstellation gezeigt, bei der der Zylinder 7 und die Platte 9 ganz oben sind, sodass die Dosierkammer 4 ein minimales Volumen hat.

In Figur 4b ist ein Zustand dargestellt, bei dem die Dosierkammer 4' eine mittlere Größe aufweist und in Figur 4c ist dargestellt, wie die Dosierkammer 4" eine maximale Größe aufweist.

In Figuren 1 und 4 wird die Dosierkammer 4 durch zwei Zylinderwände 5 und 7 gegeben. Es können jedoch auch mehr Zylinderwände vorgesehen sein, die teleskopartig verschiebbar ineinander angeordnet sind, um einen größeren Einstellbereich der Dosierkammer zu erhalten.

In den Figuren 1 und 4 sind die Wandstärken der Zylinderwände 5 und 7 stark überhöht dargestellt. Es kann sich bei den Wänden 5 und 7 auch um dünne Bleche oder ähnliches handeln.

Die Verstellung der Dosierkammer 4 kann automatisiert erfolgen. Dazu können entsprechende Einstellmittel wie etwa Pneumatiken, Mechaniken, Hydrauliken oder elektrische Stellmotoren vorgesehen sein.

Für den Fall, dass mehrere Dosierkammern 4 für mehrere Fülllinien vorgesehen sind, können die Kammern auch mit einem gemeinsamen Stellmittel größenveränderbar sein, so dass alle Dosierkammern 4 gleich verstellt werden. Dazu kann beispielsweise eine gemeinsame Platte 9 vorgesehen sein, die in der Höhe verstellt wird, so dass dabei auch der die Zylinderwände 7 verstellt werden. Für die Verstellung der Platte 9 können vier an den Ecken der Platte 9 Stellmittel vorgesehen sein, die beispielsweise durch einen um die vier Ecken laufenden Riemen angesteuert werden.

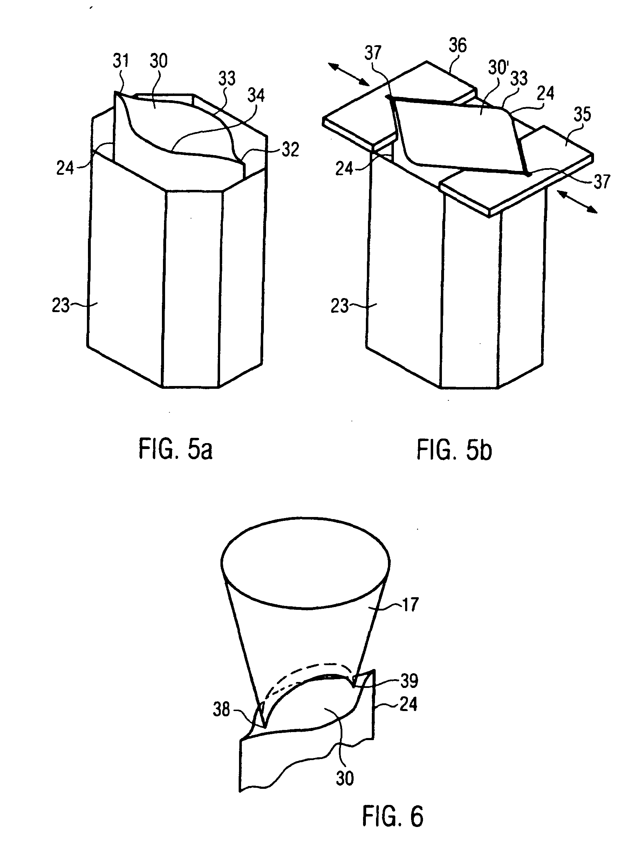

In Figur 5 sind Folienbeutel 24 in den Aufnahmen 23 gezeigt. Der Folienbeutel 24 weist Seiten 31, 32 auf, die von der Aufnahme 23 leicht zusammengedrückt werden, sodass sich die Seitenfolien 33 und 34 voneinander entfernen und eine Befüllöffnung 30 öffnen. Um die Befüllöffnung 30 zu einer größeren Befüllöffnung 30' zu öffnen, können Elemente 35, 36 seitlich an den Folienbeutel 24 herangeführt werden, um so die Seiten 31, 32 noch näher zusammenzudrücken und so die größere Befüllöffnung 30' zu erhalten. Die Elemente 35, 36 haben dabei eine dreieckige Ausnehmung, wodurch sie die Seitenfolien 33, 34 in dem geöffneten Zustand stützen können. An der Spitze der dreieckigen Ausnehmung der Elemente 35, 36 sind Schlitze 37 zur Aufnahme der seitlichen Schweißnähte an den Seiten 31, 32 des Folienbeutels 24 vorgesehen. Dies führt zu einer besonders guten Stabilisierung der Beutel während des Befüllens.

Die in Figur 5 a und 5 b dargestellten Elemente 35, 36 können sowohl bei der Befüllung mit flüssigen Nahrungsmitteln (s. Füllrohr 40 in Fig. 2), als auch bei der Befüllung mit festen Nahrungsmitteln (siehe Fülltrichter 17 in Fig. 2) vorgesehen sein.

Figur 6 zeigt das untere Ende des Fülltrichters 17, das keilförmige Enden 38, 39 aufweist. Diese Enden 38, 39 können leicht in einen etwas geöffneten Folienbeutel 30 eingeführt werden, sodass bei Absenkung des Fülltrichters 17 dieser die Öffnung 30 des Folienbeutels 24 weiter öffnet und so das untere Ende des Fülltrichters 17 vollständig in den Folienbeutel 24 eingeführt werden kann.

Am unteren Ende des Fülltrichters 17 (siehe Figur 6) können auch seitliche Gasaustrittsöffnungen 47 vorgesehen sein, die es erlauben, dass das Gas, das aus der Ringleitung 18 ausströmt, außerhalb des Folienbeutels 24 aus dem Fülltrichter 17 abgeführt wird. Die Öffnungen sollten klein genug sein, um das feste Nahrungsmittel nicht auch hindurchtreten zu lassen.

An dem Fülltrichter 17 können auch Öffnungen 47 vorgesehen sein, durch die Luft oder Flüssigkeit in das Innere des Fülltrichters 17 geleitet wird. Diese Öffnungen 47 können über der ganzen Länge oder nur in einem Teil des Fülltrichters 17 vorgesehen sein. Vorteilhaft ist die Anordnung dieser Öffnungen 47 insbesondere dort, wo das feste Nahrungsmittel auf die Wandung des Fülltrichters auftreffen würde, da so ein Festsetzten des festen Nahrungsmittels an der Wandung durch die einströmende Luft verhindert wird. Die Luft bildet hierbei ein Luftpolster. Besonders vorteilhaft sind diese Öffnungen 47 am unteren Ende des Fülltrichters 17, da hier die Gefahr eines Verstopfens des Fülltrichters 17 besonders hoch ist, da der Fülltrichter 17 hier am engsten ist. Durch die Öffnungen 47 kann für Reinigungszwecke auch Wasser bzw. eine Reinigungsflüssigkeit in den Fülltrichter gegeben werden. Für die Luft oder das Reinigungsfluid müssen entsprechende Zuleitungen an der Außenseite des Fülltrichters 17 vorgesehen sein.

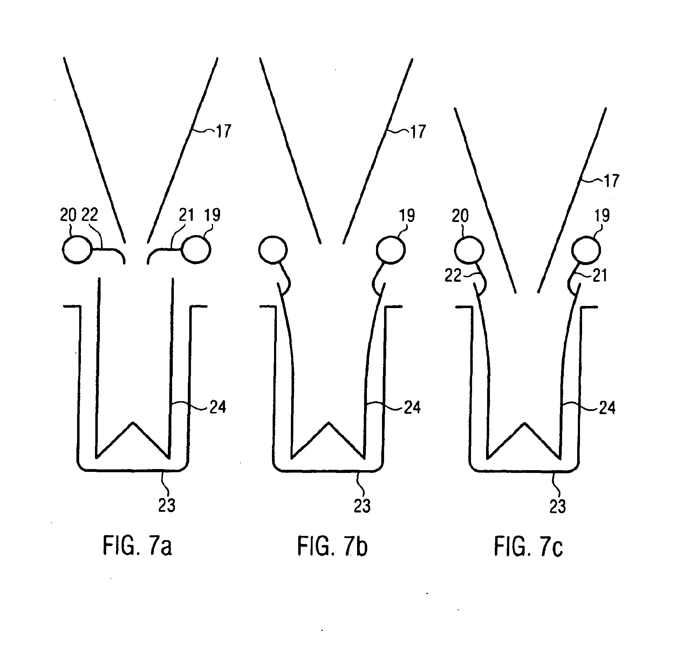

In Figur 7 ist das Absenken des Fülltrichters 17 bei dem Befüllvorgang im Detail dargestellt. In Figur 7 a ist eine Aufnahme 23 mit einem Folienbeutel 24 unterhalb eines Fülltrichters 17 angelangt. Arme 21, 22 von drehbaren Stangen 19, 20 sind in einer oberen Position, so dass der Beuteltransport nicht behindert wird. Durch Drehung der Stangen 19, 20 können die Arme 21, 22 in eine untere Position bewegt werden, wobei dabei die oberen Seitenfolien des Folienbeutels 24 auseinandergezogen werden. Dadurch wird der nötige Raum für den Fülltrichter 17 geschaffen. Dieser Zustand ist in Figur 7b zu erkennen. Nach Öffnung des Folienbeutels 24 kann der Fülltrichter 17 nach unten abgesenkt werden. Dabei endet die untere Öffnung des Fülltrichters 17 innerhalb des Folienbeutels 24. Im Zustand, wie er in Figur 7boder 7 c gezeigt ist, kann nun festes Nahrungsmittel zuverlässig in den Folienbeutel 24 gefüllt werden. Nachdem der Fülltrichter 17 in den Zustand, wie er in Figur 7 c gezeigt ist, abgesenkt wurde, ist es vorteilhaft, den Fülltrichter 17 noch einmal in die Position von Figur 7b zu bringen und anschließend wieder in die Figur 7c abzusenken. Dadurch wird erreicht, dass eventuell sich in dem Fülltrichter 17 festgesetztes Nahrungsmittel gelockert wird und beim zweiten Absenken des Fülltrichters 17 in den Folienbeutel 24 gelangt. Nach dem erfolgten Befüllen des Folienbeutels 24 wird der Fülltrichter 17 in den Zustand in Figur 7 a zurückgeführt, d. h. nach oben wegbefördert bis er oberhalb des Folienbeutels 24 ist und die Stangen 19, 20 werden so gedreht, dass die Arme 21 und 22 sich wieder in der oberen Position befinden (siehe Figur 7 a). Die Aufnahme 23 kann dann seitlich wegbewegt werden, wobei der Folienbeutel 24 ebenfalls seitlich wegbewegt wird.

Die Stangen 19, 20 mit den Hebeln 21, 22 können auch zum Öffnen für die Befüllung mit flüssigen Gut vorgesehen sein.

Die Vorrichtung kann mehrere nebeneinander angeordnete Fülllinien aufweisen, wobei beispielsweise benachbarte Aufnahmen 23 miteinander verbunden sind, sodass diese zusammenbewegt werden können. So können beispielsweise nebeneinander mindestens 10, mindestens 15 oder noch mehr Fülllinien vorgesehen sein, wobei jede Fülllinie einen eigenen Fülltrichter 17 und eine eigene Dosiereinrichtung umfasst. Die Fülllinien können einen gemeinsamen Vorratstrichter 2 und ein gemeinsames Linearrührwerk 3 aufweisen.

## Patentansprüche

1. Vorrichtung (1) zum Befüllen von Folienbeuteln (24) mit Nahrungsmitteln (42) mit:
- einer Transporteinrichtung (23) zum Transportieren von Folienbeuteln (24),
- einer Dosiereinrichtung (27) zum Abmessen einer vorbestimmten Menge an festen Nahrungsmitteln (42) und
- einer Befülleinrichtung (17, 18) zum Befüllen der Folienbeutel (24) mit der abgemessenen Menge an festen Nahrungsmitteln (42),
- einer Verschließeinrichtung (43) zum Verschließen der Folienbeutel (24) und
- einem Vorratstrichter (2), in dem ein Verteilorgan (3) vorgesehen ist,
**dadurch gekennzeichnet, dass** das Verteilorgan (3) ein Linearrührwerk ist, das nach unten gerichtete Stäbe umfasst, die seitwärts hin- und her bewegbar sind,
wobei die Vorrichtung mehrere nebeneinander angeordnete Fülllinien aufweist, von denen jede einen eigenen Fülltrichter (17) und eine eigene Dosiereinrichtung (27) umfasst und die den Vorratstrichter (2) und das Linearrührwerk (3) gemeinsam haben.

2. Vorrichtung nach Anspruch 1, **dadurch gekennzeichnet, dass** die Befülleinrichtung (17, 18) eine Produktleitung (17) umfasst, die an der Befüllposition der Folienbeutel (24) endet.

3. Vorrichtung nach Anspruch 2, **dadurch gekennzeichnet, dass** die Produktleitung (17) trichterförmig ist.

4. Vorrichtung nach einem der Ansprüche 2 oder 3, **dadurch gekennzeichnet, dass** die Produktleitung (17) bewegbar ist, so dass das Ende der Produktleitung (17) in die Folienbeutel (24) rein- und raus bewegbar ist.

5. Vorrichtung nach einem der Ansprüche 2 bis 4, **dadurch gekennzeichnet, dass** die Produktleitung (17) an ihrem zum Folienbeutel (24) gerichteten Ende keilförmig ist.

6. Vorrichtung nach einem der Ansprüche 2 bis 5, **dadurch gekennzeichnet, dass** am oberen Ende oder oberhalb der Produktleitung (17) ein Fluidauslass (18) vorgesehen ist, mit dem ein Fluid in die Produktleitung (17) gegeben werden kann.

7. Vorrichtung nach Anspruch 6, **dadurch gekennzeichnet, dass** der Fluidauslass (18) ringförmig ist und/oder das Fluid ringförmig verteilen kann.

8. Verfahren zum Befüllen von Folienbeuteln (24) mit Nahrungsmitteln (42) mit den Schritten:
- Transportieren der Folienbeutel (24),
- Bevorraten von festen Nahrungsmitteln in einem Vorratstrichter (2);
- Abmessen einer vorbestimmten Menge von festem Nahrungsmittel (42),
- Befüllen der Folienbeutel (24) mit der abgemessenen Menge an festen Nahrungsmitteln (42) und
- Verschließen der Folienbeutel (24),
**dadurch gekennzeichnet, dass** ein Linearrührwerk die festen Nahrungsmittel in dem Vorratstrichter verteilt, wobei die Vorrichtung mehrere nebeneinander angeordnete Fülllinien aufweist, von denen jede einen eigenen Fülltrichter (17) und eine eigene Dosiereinrichtung (27) umfasst und die den Vorratstrichter (2) und das Linearrührwerk (3) gemeinsam haben,
und wobei das Linearrührwerk nach unten gerichtete Stäbe umfasst, die seitwärts hin- und her bewegbar sind.

9. Verfahren nach Anspruch 8, **dadurch gekennzeichnet, dass** die festen Nahrungsmittel (42) mit einer Produktleitung (17), vorzugsweise einem Fülltrichter, in die Folienbeutel (24) eingebracht werden.

10. Verfahren nach Anspruch 9, **dadurch gekennzeichnet, dass** die Produktleitung (17) auf den Folienbeutel (24) zubewegt wird und vorzugsweise danach weg- und wieder zubewegt wird.

11. Verfahren nach einem der Ansprüche 9 oder 10, **dadurch gekennzeichnet, dass** beim Befüllen der Folienbeutel (24) ein Gas, wie etwa Luft, in die Produktleitung (17) eingeblasen wird.

12. Verfahren nach einem der Ansprüche 9 bis 11, **dadurch gekennzeichnet, dass** die Produktleitung (17) auf der Seite mit Kontakt zu dem Nahrungsmittel befeuchtet wird, beispielsweise mit Dampf.

## Claims

1. A device (1) for the filling of foil bags (24) with foods (42), comprising:
- a transport device (23) for transporting foil bags (24),
- a dosing device (27) for measuring out a predetermined quantity of solid foods (42) and
- a filling device (17, 18) for filling the foil bags (24) with the measured quantity of solid foods (42),
- a closing device (43) for closing the foil bags (24), and
- a storage hopper (2) in which a distribution unit (3) is provided,
**characterised in that** the distribution unit (3) is a linear stirring unit which preferably comprises downwardly directed rods which can be moved sideways back and forth,
wherein the device comprises a plurality of filling lines arranged side by side, of which each includes its own filling hopper (17) and its own dosing device (27) and which have the storage hopper (2) and the linear stirring unit (3) in common.

2. The device according to Claim 1, **characterised in that** the filling device (17, 18) includes a product line (17) which ends at the filling position of the foil bags (24).

3. The device according to Claim 2, **characterised in that** the product line (17) is in the form of a hopper.

4. The device according to one of Claims 2 or 3, **characterised in that** the product line (17) is movable so that the end of the product line (17) can be moved in and out of the foil bags (24).

5. The device according to one of Claims 2 to 4, **characterised in that** the product line (17) is wedge-shaped at its end facing the foil bag (24).

6. The device according to one of Claims 2 to 5, **characterised in that**, at the upper end of or above the product line (17), a fluid outlet (18) is provided with which a fluid can be passed into the product line (17).

7. The device according to Claim 6, **characterised in that** the fluid outlet (18) is in the shape of a ring and / or can distribute the fluid in a ring shape.

8. A method for the filling of foil bags (24) with foods (42) with the following steps:
- transport of the foil bags (24),
- storing solid foods in a storage hopper (2),
- measuring out a predetermined quantity of solid foods (42),
- filling the foil bags (24) with the measured quantity of solid foods (42) and
- closing the foil bags (24),
**characterised in that** a linear stirring unit distributes the solid foods in the storage hopper, wherein the device comprises a plurality of filling lines arranged side by side, of which each includes its own filling hopper (17) and its own dosing device (27) and which have the storage hopper (2) and the linear stirring unit (3) in common,
and wherein the linear stirring unit comprises downwardly directed rods that can be moved sideways back and forth.

9. The method according to Claim 8, **characterised in that** the solid foods (42) can be passed into the foil bags (24) using a product line (17), preferably a filling hopper.

10. The method according to Claim 9, **characterised in that** the product line (17) is moved to the foil bag (24) and preferably then moved away and moved back.

11. The method according to one of Claims 9 or 10, **characterised in that**, when the foil bags (24) are being filled, a gas, such as air, is blown into the product line (17).

12. The method according to one of Claims 9 to 11, **characterised in that** the product line (17) is moistened on the side in contact with the foods, for example with steam.

## Revendications

1. Dispositif (1) pour remplir d'aliments (42) des sachets en film (24), avec :
- un dispositif de transport (23) pour transporter des sachets en film (24),
- un dispositif de dosage (27) pour mesurer une quantité prédéfinie d'aliments solides (42), et
- un dispositif de remplissage (17, 18) pour remplir les sachets en film (24) avec la quantité mesurée d'aliments solides (42),
- un dispositif de fermeture (43) pour fermer les sachets en film (24), et
- une trémie réservoir (2) dans laquelle est prévu un organe de répartition (3),
**caractérisé en ce que** l'organe de répartition (3) est un mélangeur linéaire comprenant des tiges dirigées vers le bas qui sont aptes à décrire un mouvement de va-et-vient latéral,
étant précisé que le dispositif comporte plusieurs lignes de remplissage qui sont disposées côte à côte, qui comprennent chacune leur propre trémie de remplissage (17) et leur propre dispositif de dosage (27) et qui ont en commun la trémie réservoir (2) et le mélangeur linéaire (3).

2. Dispositif selon la revendication 1, **caractérisé en ce que** le dispositif de remplissage (17, 18) comprend une conduite pour produit (17) qui se termine au niveau de la position de remplissage des sachets en film (24).

3. Dispositif selon la revendication 2, **caractérisé en ce que** la conduite pour produit (17) a la forme d'un entonnoir.

4. Dispositif selon l'une des revendications 2 ou 3, **caractérisé en ce que** la conduite de produit (17) est mobile, de sorte que l'extrémité de ladite conduite (17) est apte à entrer dans les sachets en film (24) et à sortir de ceux-ci.

5. Dispositif selon l'une des revendications 2 à 4, **caractérisé en ce que** la conduite de produit (17) a la forme d'un coin à son extrémité dirigée vers le sachet en film (24).

6. Dispositif selon l'une des revendications 2 à 5, **caractérisé en ce qu'**il est prévu, à l'extrémité supérieure ou au-dessus de la conduite de produit (17), un orifice de sortie de fluide (18) grâce auquel un fluide peut être amené dans la conduite de produit (17).

7. Dispositif selon la revendication 6, **caractérisé en ce que** l'orifice de sortie de fluide (18) est annulaire et/ou peut répartir le fluide suivant une forme annulaire.

8. Procédé pour remplir d'aliments (42) des sachets en film (24), avec les étapes suivantes :
- transport des sachets en film (24),
- approvisionnement d'une trémie réservoir (2) en aliments solides,
- dosage d'une quantité prédéfinie d'aliments solides (42),
- remplissage des sachets en film (24) avec la quantité dosée d'aliments solides (42), et
- fermeture des sachets en film (24),
**caractérisé en ce qu'**un mélangeur linéaire répartit les aliments solides dans la trémie réservoir, étant précisé que le dispositif comporte plusieurs lignes de remplissage qui sont disposées côte à côte, qui comprennent chacune leur propre trémie de remplissage (17) et leur propre dispositif de dosage (27) et qui ont en commun la trémie réservoir (2) et le mélangeur linéaire (3),
et étant précisé que le mélangeur linéaire comprend des tiges dirigées vers le bas qui sont aptes à décrire un mouvement de va-et-vient latéral.

9. Procédé selon la revendication 8, **caractérisé en ce que** les aliments solides (42) sont amenés dans les sachets en film (24) à l'aide d'une conduite de produit (17), de préférence une trémie de remplissage.

10. Procédé selon la revendication 9, **caractérisé en ce que** la conduite de produit (17) est avancée vers le sachet en film (24) puis est de préférence éloignée et à nouveau avancée.

11. Procédé selon l'une des revendications 9 ou 10, **caractérisé en ce que** lors du remplissage des sachets en film (24), un gaz tel que de l'air est injecté dans la conduite de produit (17).

12. Procédé selon l'une des revendications 9 à 11, **caractérisé en ce que** la conduite de produit (17) est humidifiée, par exemple avec de la vapeur, sur son côté qui est en contact avec l'aliment.
